# EUROPÄISCHE PATENTSCHRIFT

(11) **EP 2 821 677 B1**
(45) Veröffentlichungstag und Bekanntmachung des Hinweises auf die Patenterteilung: **09.10.2024**
(21) Anmeldenummer: 14002265.8
(22) Anmeldetag: 02.07.2014
(51) Int. Cl.: F16K 1/32, F16K 31/06, F16K 27/02

(54) **2/2-WEG-VENTIL MIT STELLANTRIEB**
2/2 WAY VALVE WITH ACTUATING DRIVE
VANNES À 2/2 VOIES DOTÉE D'UN MÉCANISME DE COMMANDE

(30) Priorität: 02.07.2013 CH 11962013
(43) Veröffentlichungstag der Anmeldung: 07.01.2015
(73) Patentinhaber: Isliker Magnete AG, 8450 Andelfingen (CH)
(72) Erfinder: Mühle, Peter, 8200 Schaffhausen (CH)
(74) Vertreter: Alder, Hans Rudi

(56) Entgegenhaltungen:
- EP-A1- 0 139 839
- US-A- 3 329 165
- US-A- 4 298 027
- US-A1- 2012 061 600

## Beschreibung

Die vorliegende Erfindung betrifft ein druckbalanciertes Ventil mit Stellantrieb, vorzugsweise ein 2/2-Weg-Ventil für ein gasförmiges Arbeitsmedium, gemäss Oberbegriff des Anspruchs 1.

Solche Ventile finden ihre Verwendung generell als einfache Absperr-, resp. Durchgangsventile, um das Durchströmen eines bspw. gasförmigen Mediums zwischen einem Einström- und einem Ausströmkanal zu steuern. Mit dem vorliegenden Ventil soll insbesondere eine Sortiervorrichtung, wie bspw. bei einer Recycling-Anlage, bestückt werden können, um zerkleinerte Einzelteile mit vorgespannten gasförmigen Medien, insbesondere Druckluft, voneinander zu separieren. Solche Recycling-Anlagen sind hinlänglich bekannt und werden bspw. in der WO2007068697 oder EP-1752228 näher beschrieben.

Die mit diesen Recycling-Anlagen verwendeten Sortiervorrichtungen umfassen ganze Batterien von einzeln aktivierbaren Druckluftdüsen, wie sie bspw. aus der EP-1754550 (Fig.3) bekannt sind. Insbesondere offenbart diese Druckschrift ein druckbalanciertes 2/2-Weg-Ventil mit einem unabhängigen Stellantrieb, insbesondere mit einem elektromagnetischen Aktuator. Ein für denselben Verwendungszweck vorgesehenes druckbalanciertes 2/2-Weg-Ventil wird in der US-2008/0251748 (Fig.9) offenbart. Ventile mit dieser Bauart sollen im Folgenden auch als schleifende Ventile bezeichnet werden und umfassen ein Ventilgehäuse mit einer Ventilkammer und mindestens einem damit kommunizierenden Einlass- und Auslasskanal, wobei in der Ventilkammer zwischen dem Einlasskanal und dem Auslasskanal mindestens ein Ventilsitz vorgesehen ist und ein Ventilstössel (Poppet) bewegbar angeordnet ist. Diese Ventile umfassen darüber hinaus einen elektromagnetischen Stellantrieb, um den Ventilstössel in eine Durchströmstellung zu verschieben, sowie eine federelastische Rückstellfeder, um den Ventilstössel in eine Schliessstellung zu bringen. Um die Dichtheit zu gewährleisten ist der Ventilstössel mit O-Ringen oder ähnlichen Elementen versehen, welche den Raum zwischen Ventilstössel und Ventilkammer abdichten.

Leider verschleissen diese Dichtungen, resp. O-Ringe wegen der häufigen und schleifenden Bewegungen innerhalb der Ventilkammer sehr rasch und es lagert sich deshalb auch viel unerwünschter Abrieb ab. Diese Ablagerungen führen zu Beeinträchtigungen der Funktionsfähigkeit, resp. Schaltleistung. Insbesondere führen diese Ablagerungen zur Verlangsamung der Schliess- und Öffnungsbewegung und damit zu einer unerwünschten Verlängerung der Zykluszeiten. Insbesondere auch deshalb, weil beim Übergang von Haftreibung zu Gleitreibung erhöhte Kräfte beim Stellantrieb, z.B. ein Elektromagnet, erforderlich werden, welche bei einem optimiert ausgelegten Stellantrieb jedoch nicht zur Verfügung stehen. Die Reibungsverluste bei diesen Ventilen erfordern starke Stellantriebe und stehen einer Miniaturisierung im Weg. Ausserdem wird durch diese Ablagerungen nicht nur die Schliesskraft des Ventils verringert sondern wird auch die Innenfläche der Ventilkammer beschädigt, was wiederum zu irreversiblen Leckagen führen kann. Eine regelmässige und häufige Wartung dieser Ventile ist unumgänglich.

Es ist deshalb auch schon vorgeschlagen worden die schleifenden Dichtungen (O-Ringe) durch eine elastische Membrane (Diaphragma) zu ersetzen. Ein derartiges Ventil wird bspw. in der US2012/0061600 (Fig.3) beschrieben und soll im Folgenden als nicht-schleifendes oder membranbasiertes Ventil bezeichnet werden. Ventile dieser Bauart weisen anstelle der schleifenden Dichtungselemente (meist O-Ringe) und zur Bildung einer Durchströmkammer ein erstes und ein zweites, diese Durchströmkammer begrenzendes, nicht-schleifendes Dichtungselement in Form einer elastischen Membran auf. Der innerhalb dieser Durchströmkammer liegende Teil des Ventilstössels weist einen Ventilkopf auf, welcher in Schliessstellung am Ventilsitz anliegt und in Durchströmstellung den Ventilsitz frei gibt. Es versteht sich, dass die in Schliessstellung aufeinanderliegenden Stossflächen von Ventilkopf und Ventilsitz so dimensioniert und gestaltet (designed) sein müssen, dass diese das Ventil in Schliessstellung druckdicht verschliessen. Vorzugsweise ist bei den Ventilen dieser Art der Ventilkopf mit einem Elastomer überzogen, um die gewünschte Dichtheit zu gewährleisten. Dieses Elastomer wird in der Regel vorgängig mit Hilfe eines Spritzgiesswerkzeugs auf den Ventilkopf aufgebracht.

Leider erweist sich die Montage solcher membranbasierter Ventile als äusserst aufwändig und es können diese nicht in einfacher Weise ersetzt oder unterhalten werden. Insbesondere erfordert die Revision eines fehlerhaft funktionierenden Ventils eine aufwändige Zerlegung vor Ort, was die Standzeit der betroffenen Anlage bspw. eine Sortiervorrichtung, in unerwünschter Weise verlängert. Darüber hinaus entsteht beim Anspritzen des Elastomers immer auch ein Trenngrat (mould parting line), welche das abdichtende Anliegen von Ventilkopf und Ventilsitz in der Schliessstellung behindert, d.h. die Dichtheit des Ventils in Schliessstellung beeinträchtigt. Dieser Trenngrat wird deshalb meist nachträglich abgeschliffen, was einen weiteren unerwünschten (kostengenerierenden) Herstellungsschritt erfordert und in der Verwendung auch zu einer Schwachstelle führt, insbesondere weil die angeschliffenen Stellen aufgeraut sind, d.h. keine glatte Haut mehr aufweisen und deshalb Feuchtigkeit, Schmutz, etc. rasch aufnehmen. Weitere Ventile sind aus US 3 329 165 A und EP 0 139 839 A1 bekannt.

Es ist deshalb Aufgabe der vorliegenden Erfindung ein druckbalanciertes Ventil, vorzugsweise ein 2/2-Weg-Ventil für ein gasförmiges Arbeitsmedium zu schaffen, welches die Nachteile der schleifenden und/oder nicht-schleifenden Ventile bekannter Art nicht aufweist. Insbesondere sollen mit der vorliegenden Erfindung die mechanischen Reibungsverluste minimiert werden, um damit die Betriebsleistung für den Stellantrieb reduzieren zu können und schnellere Schaltzeiten zu ermöglichen. Mit der Reduktion der mechanischen Reibungsverluste soll auch die Lebensdauer dieser Ventile substanziell erhöht werden. Es ist eine weitere Aufgabe der vorliegenden Erfindung eine kompaktere und einfacher montier- resp. demontierbare Bauweise des Ventils zu schaffen. Diese Aufgabe wird erfindungsgemäss mit einem Ventil mit den Merkmalen des Anspruchs 1 gelöst. Insbesondere ist dieses für ein vorgespanntes, gasförmiges Arbeitsmedium (z.B. Druckluft) geeignet und vorzugsweise als ein druckbalanciertes 2/2-Weg-Ventil ausgebildet. Dieses Ventil umfasst ein Ventilgehäuse mit einer Ventilkammer, mindestens einen Einlasskanal und mindestens einen Auslasskanal, sowie einen elektromagnetischen Stellantrieb mit einem Anker, einer Wicklung, einem Spulenkörper, einem Pol, einem Joch und einem Stellantriebsgehäuse, sowie einen in diesen Stellantrieb ragenden Ventilstössel, welcher einen antriebsseitigen Ventilstösselstift und einen auslasskanalseitigen Ventilstösselkopf aufweist, sowie ein mit diesem Ventilstössel zusammenwirkendes federelastisches Rückstellelement. Zwischen dem Einlasskanal und dem Auslasskanal ist mindestens ein Ventilsitz vorgesehen. Der Ventilstösselkopf ist mit einer Ventilstösselkopfbeschichtung versehen. Das Ventil weist zur Abdichtung der Ventilkammer mindestens ein nicht-schleifendes Dichtungselement auf, wobei das federelastische Rückstellelement und die Ventilkopfbeschichtung miteinander stoffschlüssig verbunden sind, d.h. ein elastisches Formteil bilden.

In einer bevorzugten Ausführungsform ist das elastische Formteil aus demselben Material, insbesondere einem Elastomer, gebildet, d.h. ist ein einstückiges Formteil und insbesondere ein spritzgegossenes Formteil. Vorteilhafterweise weist dieses Formteil keinen längs verlaufenden, sondern einen radial umlaufenden Trenngrat auf.

Erfindungsgemäss ist das Formteil derart dimensioniert, dass das Ventil druckbalanciert ist, d.h. dass das Formteil derart gestaltet und dimensioniert ist, dass sich im geschlossenen Zustand die vom Arbeitsmedium erzeugten und auf die druckbelasteten Flächenteile der beweglichen Ventilteile wirkenden Kräfte gegenseitig kompensieren.

In einer ersten bevorzugten Ausführungsform ist das nicht-schleifende Dichtungselement als Membrandichtung ausgebildet, welche die unter Druck stehende Ventilkammer antriebsseitig druckdicht abschliesst und vorzugsweise zwischen dem Pol und dem Gehäuse des Stellantriebs angeordnet ist.

In einer zweiten besonderen Ausführungsform ist das nicht-schleifende Dichtungselement als Ringdichtung ausgebildet, welche den mit der Ventilkammer kommunizierenden und in Betrieb unter Druck stehenden Innenraum des Stellantriebs antriebsseitig druckdicht abschliesst und vorzugsweise zwischen dem Joch und dem Gehäuse des Stellantriebs angeordnet ist.

In einer weiteren dritten Ausführungsform ist das nicht-schleifende Dichtungselement eine Dichtung geeigneter Art, welche den mit der Ventilkammer kommunizierenden und in Betrieb unter Druck stehenden Innenraum einer Ventilgehäusekapsel eingekapselten Stellantrieb druckdicht abschliesst und vorzugsweise zwischen einem Kapseldeckel und einer Kapselwand angeordnet ist.

Weitere bevorzugte Ausführungsformen weisen die Merkmale der Unteransprüche auf.

Im Folgenden soll die vorliegende Erfindung anhand einiger Ausführungsbeispiele und mit Hilfe der Figuren näher erläutert werden. Dabei zeigt:
- Fig. 1:: einen schematischen Querschnitt durch eine erste Ausführungsform eines erfindungsgemässen Ventils und dessen Stellantrieb;
- Fig. 2:: einen schematischen Querschnitt durch den Stellantrieb Fig. 1;
- Fig. 3:: einen schematischen Querschnitt durch eine zweite Ausführungsform eines erfindungsgemässen Ventils und dessen Stellantrieb;
- Fig. 4:: einen schematischen Querschnitt durch eine dritte Ausführungsform eines erfindungsgemässen Ventils und dessen Stellantrieb.

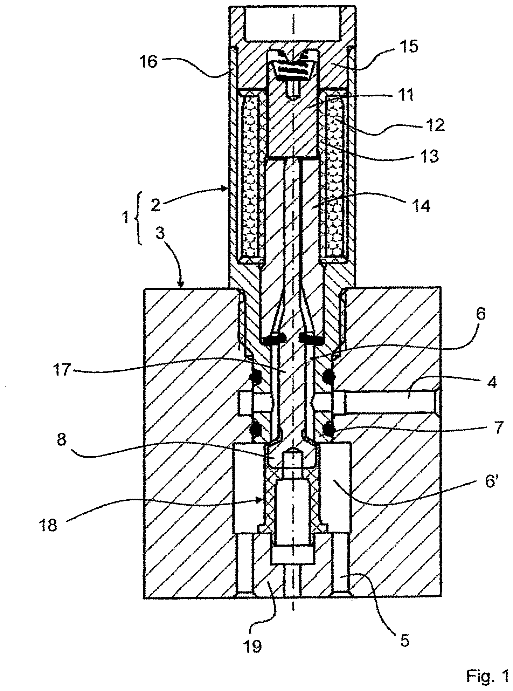

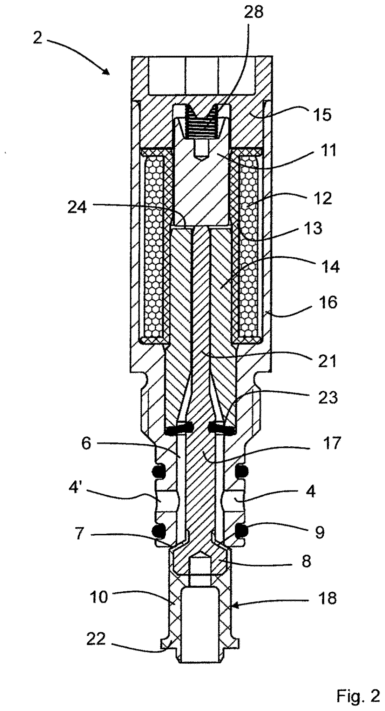

Das in Fig. 1 dargestellte, erfindungsgemässe Ventil 1 zeigt ein 2/2-Weg-Ventil für ein gasförmiges Arbeitsmedium, hier Druckluft, und umfasst einen elektromagnetischen Stellantrieb 2 sowie ein Ventilgehäuse 3, in welches dieser Stellantrieb 2 eingesetzt ist. Dieses Ventilgehäuse 3 weist mindestens einen Einlasskanal 4 und mindestens einen Auslasskanal 5 auf. Diese Kanäle 4, 5 kommunizieren in Öffnungsstellung des Ventils 1 über einen dazwischenliegenden Durchströmkanal miteinander. Mit Hilfe der Kontaktflächen eines Ventilsitzes 7 und eines Stösselkopfs 8 lässt sich dieser Durchströmkanal in Schliessstellung des Ventils 1 druckdicht unterbrechen, nämlich in eine einlasskanalseitige Ventilkammer 6 und eine auslasskanalseitige Auslasskammer 6'. Der elektromagnetische Stellantrieb 2 umfasst einen Anker 11, eine Wicklung 12, einen Spulenkörper 13, einen Pol 14, ein Joch 15 und ein Stellantriebsgehäuse 16. Dieses Stellantriebsgehäuse 16 ist mit dem Ventilgehäuse 3 fest verbunden und weist in seinem Innern einen Ventilstössel 17 auf, welcher vom Anker 11 in axialer Richtung bewegbar ist und am entgegengesetzten Ende ein elastisches Formteil 18 aufweist. Dieses elastische Formteil 18 wirkt als federelastisches Rückstellelement 10 für den Ventilstössel 17 und liegt auf einem Boden 19 der Auslasskammer 6' abdichtend auf. Aufbau und Wirkungsweise des elektromagnetischen Stellantriebs 2 sollen in Fig. 2 näher erläutert werden.

Der in Fig. 2 dargestellte elektromagnetische Stellantrieb 2 weist einen Anker 11, eine Wicklung 12, einen Spulenkörper 13, einen Pol 14, ein Joch 15 und ein Stellantriebsgehäuse 16 auf. Der Ventilstössel 17 umfasst antriebsseitig einen im Joch 14 axial beweglichen Ventilstift 21 und auslasskanalseitig einen Ventilstösselkopf 8. Erfindungsgemäss ist der Stössel 17 mit einem elastischen Formteil 18 fest verbunden, wobei dieses elastische Formteil 18 den Ventilstösselkopf 8 vollständig einbettet und mit einer Sockelpartie 22 auf dem Boden 19 der Auslasskammer 6' dicht aufliegt. Ein nicht-schleifendes Dichtungselement 23 in Form einer Membrandichtung zwischen Stössel 17 und Pol 14 schliesst die Ventilkammer 6 antriebsseitig druckdicht ab. Im Betrieb wird die Ventilkammer 6 über den Einlasskanal 4 und allfällige weitere Kanäle 4' mit einem unter Druck stehenden gasförmigen Arbeitsmedium gefüllt. Dadurch wird der Stössel 17 über das nicht-schleifende elastische Dichtungselement 23 (hier eine Membrandichtung) gegen den Anker 11 des Stellantriebs 2 gedrückt. Der Anker 11 ist mit einem Federelement 28 am Joch 15 abgestützt und liegt deshalb permanent am Ventilstift 21 des Ventilstössels 17 auf. Der in das Stellantriebsgehäuse 16 eingearbeitete Ventilsitz 7 liegt dabei mit seiner Kontaktfläche abdichtend an der beschichteten Kontaktfläche des Ventilstösselkopfes 8 an. Zur Erzeugung eines druckbalancierten Ventils sind die druckbelasteten Flächenteile der Membrandichtung 23 und des beschichteten Stösselkopfes 8 derart dimensioniert, dass sich die auf diese Flächenteile wirkenden Kräfte gegenseitig kompensieren. Bei Aktivierung des Elektromagnets, resp. dessen Wicklung 12, wird der Anker 11 gegen den Pol 14 gezogen. Dabei wird der Ventilstössel 17 in Richtung des Auslasskanals 5 gestossen und entsteht eine Durchlassöffnung zwischen den Kontaktflächen des Ventilsitzes 7 und des Ventilstösselkopfes 8. Diese Öffnungsbewegung des Stössels 17 führt gleichzeitig zu einer Kompression und/oder Ausbauchung des elastischen Formteils 18. Um die Durchlassöffnung des Ventils wieder zu schliessen wird der Erregerstrom des elektromagnetischen Antriebs 2 ausgeschaltet und drückt das elastische Formteil 18 den Ventilstösselkopf 8 des Ventilstössels 17 gegen den Ventilsitz 7. Damit wird auch der Anker 11 um einen vorgegebenen Hub 24 vom Pol 14 wieder getrennt.

Vorzugsweise ist das elastische Formteil 18 aus demselben Material gefertigt und wird in einem geeigneten Spritzgiesswerkzeug an den Stösselkopf 8 angespritzt. Die besondere Geometrie des Ventilstössels 17 und des elastischen Formteils 18 erlauben es ein Spritzgiesswerkzeug zu verwenden, welches sich bspw. im Bereich der Sockelpartie 22 des elastischen Formteils 18 trennen lässt und damit einen radial umlaufenden Trenngrat erzeugt.

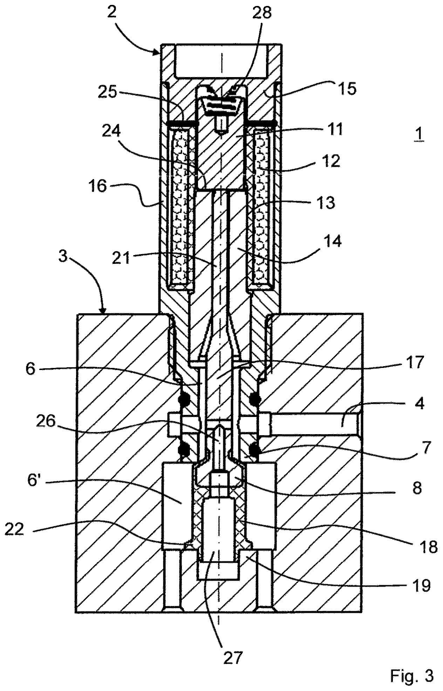

Das in Fig. 3 dargestellte erfindungsgemässe Ventil weist einen elektromagnetischen Stellantrieb 2 auf, welcher im Wesentlichen in derselben Weise aufgebaut ist, wie in Fig. 2 beschrieben und umfasst einen Anker 11, eine Wicklung 12, einen Spulenkörper 13, einen Pol 14, ein Joch 15 und ein Stellantriebsgehäuse 16. Der Ventilstössel 17 weist einen antriebsseitig im Joch 14 axial beweglichen Ventilstift 21 auf und umfasst auslasskanalseitig einen Ventilstösselkopf 8. Dieser Ventilstössel 17 ist mit einem elastischen Formteil 18 fest verbunden, wobei dieses elastische Formteil 18 den Stösselkopf 8 vollständig einbettet und mit einer Sockelpartie 22 auf dem Boden 19 der Auslasskammer 6' dicht aufliegt. Im Unterschied zur Ausführungsform gemäss Fig. 2 ist hier kein Dichtungselement in Form einer Membrandichtung zwischen Stössel 17 und Pol 14 eingefügt, sondern ist der mit der Ventilkammer 6 kommunizierende und im Betrieb unter Druck stehende Innenraum des Stellantriebs 2 jochseitig druckdicht abgedichtet, insbesondere mit Hilfe einer zwischen dem Joch 15 und dem Gehäuse 16 des Stellantriebs angeordneten Ringdichtung 25. Diese Ausführungsform für den Stellantrieb 2 unterscheidet sich von derjenigen gemäss Fig. 2 ausserdem durch eine durch den Ventilstösselkopf 8 und das Formteil 18 in eine Druckausgleichskammer 27 führende Druckausgleichsbohrung 26. Im Betrieb wird die Ventilkammer 6 über den Einlasskanal 4 und allfällige weitere Einlasskanäle mit einem unter Druck stehenden gasförmigen Arbeitsmedium (Druckluft) gefüllt. Dieses kann wegen der Ringdichtung 25 stellantriebsseitig nicht aus dem Innenraum des Stellantriebsgehäuse 16 entweichen und kann den Ventilsitz 7, welcher mit seiner Kontaktfläche abdichtend an der Kontaktfläche des beschichteten Stösselkopfes 8 anliegt, nicht freilegen, da die im Innern des elastischen Formteils 18 liegende Druckausgleichskammer 27 derart dimensioniert ist, dass sich bis auf einen geringen Anteil, die im geschlossenen Zustand vom Arbeitsmedium erzeugten und auf die druckbelasteten Flächenteile wirkenden Kräfte gegenseitig kompensieren. Zur Erzeugung eines druckbalancierten Ventils sind also lediglich die beidseitig des Ventilsitzes 7 liegenden und druckbelasteten Flächenteile zu berücksichtigen. Beim Aktivieren des Elektromagnets, resp. dessen Wicklung 12, wird der Anker 11 gegen den Pol 14 gezogen. Der Anker 11 ist mit einem Federelement 28 am Joch 15 abgestützt und liegt deshalb permanent am Ventilstift 21 des Ventilstössels 17 auf. Dabei wird der Ventilstössel 17 in Richtung des Auslasskanals gestossen und entsteht eine Durchlassöffnung zwischen den Kontaktflächen des Ventilsitzes 7 und des Stösselkopfes 8. Diese Öffnungsbewegung des Stössels 17 führt gleichzeitig zu einer Kompression und/oder Ausbauchung des elastischen Formteils 18. Um die Durchlassöffnung des Ventils wieder zu schliessen wird der Erregerstrom des elektromagnetischen Antriebs ausgeschaltet. Das elastische Formteil 18 drückt dann den Stösselkopf 8 des Ventilstössels 17 gegen den Ventilsitz 7. Damit wird auch der Anker 11 um einen vorgegebenen Hub 24 vom Pol 14 getrennt. Dieser Aufbau ermöglicht es die axiale Bewegung des Ventilstössels 17 und damit des Ventilstifts 21 präzis zu bestimmen und zu minimieren. Insbesondere lässt sich durch diese Minimierung die Schaltzeit des Ventils wesentlich reduzieren.

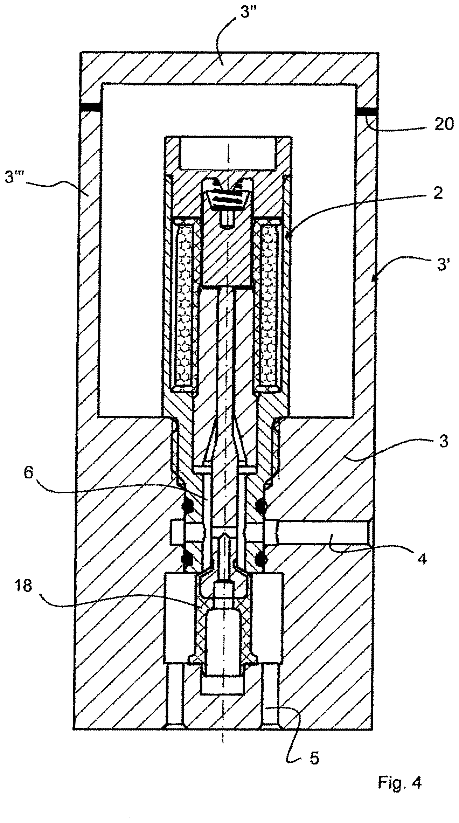

Die in Fig. 4 dargestellte Ausführungsform des erfindungsgemässen Ventils 1 unterscheidet sich von den vorgehend beschriebenen Ausführungsformen im Wesentlichen durch eine Ventilkapsel 3', welche den Stellantrieb 2 vollständig einkapselt. Der elektromagnetische Stellantrieb 2 ist im Wesentlichen in derselben Weise aufgebaut, wie in Fig. 3 beschrieben, jedoch ist bei dieser Ausführungsform kein besonderes Dichtungselement in Form einer Ringdichtung für den Stellantrieb 2 erforderlich. Im Unterschied zur Ausführungsform gemäss Fig. 2 ist hier auch kein Dichtungselement in Form einer Membrandichtung erforderlich. Die Ventilkapsel 3' weist eine Kapselwand 3‴ auf, welche mit dem Ventilgehäuse 3 fest verbunden, vorzugsweise einstückig ausgebildet ist und mit einem Kapseldeckel 3" dicht verschliessbar ist. Erfindungsgemäss ist die Verbindungsstelle zwischen der Kapselwand 3‴ und dem Kapseldeckel 3" druckdicht verschliessbar, insbesondere mit Hilfe eines Dichtungselementes 20. Dafür kann eine besondere Formgebung (z.B. druckdichte Schnapp-, Schraub- und/oder Konusflächen) vorgesehen sein und/oder ist ein zusätzliches Dichtungselement konventioneller Art (Fett) verwendbar und/oder kann dieses in Form einer zusätzlichen Ringdichtung eingesetzt sein. Wesentlich bei dieser Ausführungsform ist die druckfeste Kapselung des im Ventilgehäuse 3 eingesetzten Stellantriebs 2, um Druckverluste in der Ventilkammer 6 zu vermeiden.

Die Vorteile der erfindungsgemässen Ventilanordnung sind dem Fachmann unmittelbar ersichtlich und insbesondere in der Vermeidung der mechanischen und intrinsischen Reibungsverluste (schleifende Dichtungselemente, Deformationskräfte für das Stauchen, Dehnen oder Biegen der Membrandichtungen) zu sehen sowie in der dadurch erzeugten Reduktion des Abriebs und der elektrischen Verlustleistung, resp. Betriebsleistung für den Stellantrieb sowie insbesondere in der Ermöglichung schnellerer Schaltzeiten. Die Reduktion der Betriebsleistung für den Stellantrieb erlaubt ausserdem eine Reduktion der Dimensionierung der einzelnen Bauteile des Stellantriebs und damit eine kompaktere Anordnung innerhalb einer Ventilgruppe für bspw. eine Ausblas- oder Sortiervorrichtung. Die Reduktion der Hubbewegung führt zu rascheren Schaltzeiten bei gleicher Leistung des Stellantriebs.

Die besondere Ausgestaltung und Anordnung des erfindungsgemässen Formteils erlaubt beim Anspritzen an den Ventilkopf ein axiales Trennen des Spritzgiesswerkzeugs und erzeugt damit keinen längs gerichteten, über den Ventilkopf laufenden Trenngrat, sondern einen radial umlaufenden Trenngrat, vorzugsweise im Bereich der Sockelpartie des Formteils. Damit ist auch keine Nachbearbeitung mehr erforderlich, d.h. bleibt die Elastomer-Haut intakt, d.h. wird die Oberfläche durch Nachbehandlung nicht nachträglich noch aufgeraut resp. beschädigt. Durch das Ausbalancieren der Druckverhältnisse innerhalb des Ventils kann die erforderliche Leistung der Magnetspulen substantiell reduziert werden. Montage und Demontage des Ventils und seines Stellantriebs werden durch die vorgeschlagene Dimensionierung (Design) vereinfacht. Ein besonderer Vorteil des erfindungsgemässen Ventils ist also in der einfachen Montage, der verschleissfreien und unterhaltsarmen Betriebsweise sowie der Langlebigkeit zu sehen. Darüber hinaus eignet sich diese reibungsfreie Ventilanordnung besonders für den Einsatz mit trockenen Gasen, da keine Schmiermittel (Verunreinigungen) erforderlich sind. Es versteht sich, dass durch die lose Führung des Ventilstössels keine Kräfte erforderlich sind um Haft- und Gleitreibung überwinden zu müssen.

Es versteht sich ausserdem, dass das erfindungsgemässe Ventil nicht nur bei den eingangs genannten Sortieranlagen für Recycling-Anlagen eingesetzt werden kann, sondern auch in Sortier- und Verteiler-Anlagen aller Art, insbesondere in Postsortier-Anlagen, Stückgut-Verpackungs-Anlagen, Dosier-Anlagen in der Nahrungsmittel- und Pharmaindustrie oder in Ausblas- oder Abblasstationen bei Fertigungsanlagen, u.a..

### Referenzzeichen

- 1.: druckbalanciertes Ventil
- 2.: Stellantrieb
- 3.: Ventilgehäuse
- 3'.: Ventilkapsel
- 3".: Kapseldeckel
- 3"'.: Kapselwand
- 4.: Einlasskanal
- 5.: Auslasskanal
- 6.: Ventilkammer
- 6'.: Auslasskammer
- 7.: Ventilsitz
- 8.: Ventilstösselkopf
- 9.: Ventilstösselkopfbeschichtung
- 10.: Federelastisches Rückstellelement
- 11.: Anker
- 12.: Wicklung
- 13.: Spulenkörper
- 14.: Pol
- 15.: Joch
- 16.: Stellantriebsgehäuse
- 17.: Ventilstössel
- 18.: elastisches Formteil
- 19.: Boden
- 20.: nicht-schleifendes Dichtungselement
- 21.: Ventilstift
- 22.: Sockelpartie
- 23.: Dichtungselement in Form einer Membrandichtung
- 24.: Hub
- 25.: Dichtungselement in Form einer Ringdichtung
- 26.: Druckausgleichsbohrung
- 27.: Druckausgleichskammer
- 28.: Federelement

## Patentansprüche

1. Druckbalanciertes Ventil (1), vorzugsweise ein 2/2-Weg-Ventil für ein gasförmiges Arbeitsmedium (Druckluft), umfassend ein Ventilgehäuse (3) mit einer einlasskanalseitigen Ventilkammer (6) mit mindestens einem mit dieser Ventilkammer (6) kommunizierenden Einlasskanal (4) und mit einer auslasskanalseitigen Auslasskammer (6') mit mindestens einem Auslasskanal (5), sowie einen elektromagnetischen Stellantrieb (2) mit einem Anker (11), einer Wicklung (12), einem Spulenkörper (13), einem Pol (14), einem Joch (15) und einem Stellantriebsgehäuse (16), sowie einen in dieses Stellantriebsgehäuse (16) ragenden Ventilstössel (17), welcher einen antriebsseitigen Ventilstift (21) und einen auslasskanalseitigen Ventilstösselkopf (8) aufweist, sowie ein mit diesem Ventilstössel (17) zusammenwirkendes federelastisches Rückstellelement (10),
wobei zwischen dem Einlasskanal (4) und dem Auslasskanal (5) mindestens ein Ventilsitz (7) vorgesehen ist, wobei der Ventilstösselkopf (8) mit einer Ventilstösselkopfbeschichtung (9) versehen ist, wobei das Ventil (1) zur Abdichtung der unter Druck stehenden Ventilkammer (6) mindestens ein nicht-schleifendes Dichtungselement (20, 23, 25) aufweist,
**dadurch gekennzeichnet, dass**
das federelastische Rückstellelement (10) und die Ventilstösselkopfbeschichtung (9) miteinander stoffschlüssig verbunden sind, d.h. ein elastisches Formteil (18) bilden, welches auf einem Böden (19) der Auslasskammer (6') abdichtend aufliegt,
*wobei im deaktivierten Zustand das elastische Formteil (18) den Stösselkopf (8) des Ventilstössels (17) gegen den Ventilsitz (7) drückt und der Anker (11) um einen vorgegebenen Hub (24) vom Pol (14) getrennt ist, um die Durchlassöffnung des Ventils zwischen den Kontaktflächen des Ventilsitzes(7) und des Stösselkopfes (8) zu schliessen und*
*wobei im aktivierten Zustand der Anker (11) den Ventilstössel (17) in Richtung des Auslasskanals (5) stösst, was zu einer Kompression des elastischen Formteils (18) führt.*

2. Ventil (1) nach Anspruch 1, **dadurch gekennzeichnet, dass** das elastische Formteil (18) aus demselben Material, insbesondere einem Elastomer, gebildet ist, d.h. ein einstückiges Formteil ist.

3. Ventil (1) nach Anspruch 2, **dadurch gekennzeichnet, dass** das elastische Formteil (18) ein spritzgegossenes Formteil ist.

4. Ventil (1) nach Anspruch 3, **dadurch gekennzeichnet, dass** das elastische Formteil (18) einen radial umlaufenden Trenngrat aufweist.

5. Ventil (1) nach Anspruch 1, **dadurch gekennzeichnet, dass** das nicht-schleifende Dichtungselement (20, 23, 25) eine Membrandichtung ist, welche die Ventilkammer (6) antriebsseitig druckdicht abschliesst und vorzugsweise zwischen dem Pol (14) und dem Gehäuse (16) des Stellantriebs angeordnet ist.

6. Ventil nach Anspruch 1, **dadurch gekennzeichnet, dass** das nicht-schleifende Dichtungselement (20, 23, 25) eine Ringdichtung ist, welche den mit der Ventilkammer (6) kommunizierenden und in Betrieb unter Druck stehenden Innenraum des Stellantriebs (2) antriebsseitig druckdicht abschliesst und vorzugsweise zwischen dem Joch (15) und dem Gehäuse (16) des Stellantriebs (2) angeordnet ist.

7. Ventil (1) nach Anspruch 1, **dadurch gekennzeichnet, dass** das nicht-schleifende Dichtungselement (20, 23, 25) eine Dichtung ist, welche den über den eingekapselten Stellantrieb (2) mit der Ventilkammer (6) kommunizierenden und in Betrieb unter Druck stehenden Innenraum einer Ventilgehäusekapsel (3') druckdicht abschliesst und vorzugsweise zwischen einem Kapseldeckel (3") und einer Kapselwand (3‴) angeordnet ist.

8. Ventil (1) nach einem der Ansprüche 5 bis 7, **dadurch gekennzeichnet, dass** das Ventil (1) derart dimensioniert ist, dass sich im geschlossenen Zustand die vom Arbeitsmedium erzeugten und auf die druckbelasteten Flächenanteile der beweglichen Teile wirkenden Kräfte gegenseitig kompensieren.

9. Ventil (1) nach einem der vorherigen Ansprüche 1 bis 8, **dadurch gekennzeichnet, dass** zwischen dem Joch (15) und dem Anker (11) ein Federelement (28) angeordnet ist.

## Claims

1. Pressure-balanced valve (1), preferably a 2/2-way valve for a gaseous working medium (compressed air), comprising a valve housing (3) with an inlet-channel-side valve chamber (6) with at least one inlet channel (4) communicating with this valve chamber (6) and with an outlet-channel-side outlet chamber (6') with at least one outlet channel (5), as well as an electromagnetic actuator (2) with an armature (11), a winding (12), a coil body (13), a pole (14), a yoke (15) and an actuator housing (16), as well as a valve tappet (17) projecting into this actuator housing (16), which has a drive-side valve pin (21) and an outlet-channel-side valve tappet head (8), as well as a spring-elastic return element (10) interacting with this valve tappet (17),
wherein at least one valve seat (7) is provided between the inlet channel (4) and the outlet channel (5), the valve tappet head (8) being provided with a valve tappet head coating (9), the valve (1) having at least one non-dragging sealing element (20, 23, 25) for sealing the pressurized valve chamber (6), **characterized in that**
the spring-elastic return element (10) and the valve tappet head coating (9) are materially connected to one another, i.e. form an elastic molded part (18) which rests sealingly on a base (19) of the outlet chamber (6'),
wherein in the deactivated state the elastic molded part (18) presses the tappet head (8) of the valve tappet (17) against the valve seat (7) and the armature (11) is separated from the pole (14) by a predetermined stroke (24) in order to close the passage opening of the valve between the contact surfaces of the valve seat (7) and the tappet head (8) and
wherein in the activated state the armature (11) pushes the valve tappet (17) in the direction of the outlet channel (5), which leads to a compression of the elastic molded part (18).

2. Valve (1) according to claim 1, **characterized in that** the elastic molded part (18) is made of the same material, in particular an elastomer, i.e. is a one-piece molded part.

3. Valve (1) according to claim 2, **characterized in that** the elastic molded part (18) is an injection-molded molded part.

4. Valve (1) according to claim 3, **characterized in that** the elastic molded part (18) has a radially circumferential separating ridge.

5. Valve (1) according to claim 1, **characterized in that** the non-dragging sealing element (20, 23, 25) is a membrane seal which seals the valve chamber (6) on the drive side in a pressure-tight manner and is preferably arranged between the pole (14) and the housing (16) of the actuator.

6. Valve according to claim 1, **characterized in that** the non-dragging sealing element (20, 23, 25) is a ring seal which seals the interior of the actuator (2) on the drive side in a pressure-tight manner, which communicates with the valve chamber (6) being under pressure during operation, and is preferably arranged between the yoke (15) and the housing (16) of the actuator (2).

7. Valve (1) according to claim 1, **characterized in that** the non-dragging sealing element (20, 23, 25) is a seal which pressure tightly seals the interior of a valve housing capsule (3') which communicates with the valve chamber (6) via the encapsulated actuator (2) being pressurized during operation and is preferably arranged between a capsule cover (3") and a capsule wall (3"').

8. Valve (1) according to one of claims 5 to 7, **characterized in that** the valve (1) is dimensioned such that in the closed state the forces generated by the working medium and acting on the pressure-loaded surface portions of the moving parts compensate each other.

9. Valve (1) according to one of the preceding claims 1 to 8, **characterized in that** a spring element (28) is arranged between the yoke (15) and the armature (11).

## Revendications

1. Vanne à pression équilibrée (1), de préférence une vanne à 2/2 voies pour un fluide de travail gazeux (air comprimé), comprenant un boîtier de vanne (3) avec une chambre de vanne (6) côté canal d'entrée avec au moins un canal d'entrée (4) communiquant avec cette chambre de vanne (6) et avec une chambre de sortie (6') côté canal de sortie avec au moins un canal de sortie (5), ainsi qu'un actionneur électromagnétique (2) avec un induit (11), un bobinage (12), une bobine (13), un pôle (14), une culasse (15) et un boîtier d'actionneur (16), ainsi qu'un poussoir de vanne (17) faisant saillie dans celui-ci un boîtier d'actionneur (16) qui présente une tige de vanne (21) du côté entraînement et une tête de poussoir de vanne (8) du côté du canal de sortie, ainsi qu'un élément de rappel élastique à ressort (10) qui coopère avec ce poussoir de vanne (17),
au moins un siège de vanne (7) étant prévu entre le canal d'entrée (4) et le canal de sortie (5), la tête de poussoir de vanne (8) étant munie d'un revêtement de tête de poussoir de vanne (9), la vanne (1) utilisée pour l'étanchéité de la chambre de vanne sous pression (6) comporte au moins un élément d'étanchéité non abrasif (20, 23, 25),
**caractérisé en ce que**
l'élément de rappel élastique à ressort (10) et le revêtement de tête de poussoir de vanne (9) sont reliés l'un à l'autre de manière cohésive, c'est-à-dire forment une pièce moulée élastique (18) qui repose de manière étanche sur un fond (19) de la chambre de sortie (6'),
dans lequel, à l'état désactivé, la pièce moulée élastique (18) presse la tête de piston (8) du piston de vanne (17) contre le siège de vanne (7) et l'induit (11) est séparée du pôle (14) par un course prédéterminée (24) afin de fermer l'ouverture de passage de la vanne entre les surfaces de contact du siège de vanne (7) et la tête de poussoir (8) et
dans lequel, à l'état activé, l'induit (11) pousse le poussoir de vanne (17) en direction du canal de sortie (5), ce qui entraîne une compression de la pièce moulée élastique (18).

2. Vanne (1) selon la revendication 1, **caractérisée en ce que** la pièce moulée élastique (18) est formée du même matériau, notamment un élastomère, c'est-à-dire est une pièce moulée monobloc.

3. Vanne (1) selon la revendication 2, **caractérisée en ce que** la pièce moulée élastique (18) est une pièce moulée par injection.

4. Vanne (1) selon la revendication 3, **caractérisée en ce que** la pièce moulée élastique (18) présente une arête de séparation radialement circonférentielle.

5. Vanne (1) selon la revendication 1, **caractérisée en ce que** l'élément d'étanchéité non abrasif (20, 23, 25) est un joint à membrane qui ferme hermétiquement la chambre de vanne (6) du côté entraînement et de préférence entre le pôle (14) et le boîtier (16) de l'actionneur.

6. Vanne selon la revendication 1, **caractérisée en ce que** l'élément d'étanchéité non abrasif (20, 23, 25) est un joint annulaire qui assure une étanchéité à la pression du côté entraînement de l'intérieur de l'actionneur (2) qui communique avec la chambre de vanne (6) et est sous pression pendant le fonctionnement et est disposé de préférence entre la culasse (15) et le boîtier (16) de l'actionneur (2).

7. Vanne (1) selon la revendication 1, **caractérisée en ce que** l'élément d'étanchéité non abrasif (20, 23, 25) est un joint qui assure une étanchéité à la pression de l'intérieur d'une capsule de boîtier de vanne (3') qui communique avec la chambre de vanne (6) via l'actionneur (2) encapsulé et étant sous pression pendant le fonctionnement et est de préférence disposé entre un couvercle de capsule (3") et une paroi de capsule (3''').

8. Vanne (1) selon l'une des revendications 5 à 7, **caractérisée en ce que** la vanne (1) est dimensionnée de telle sorte qu'à l'état fermé les forces générées par le fluide de travail et agissant sur les parts de surfaces des pièces mobiles chargées par pression se contrebalance mutuellement.

9. Vanne (1) selon l'une des revendications précédentes 1 à 8, **caractérisée en ce qu'**un élément ressort (28) est disposé entre la culasse (15) et l'induit (11).
